# EUROPÄISCHE PATENTSCHRIFT

(11) **EP 2 775 241 B1**
(45) Veröffentlichungstag und Bekanntmachung des Hinweises auf die Patenterteilung: **07.08.2019**
(21) Anmeldenummer: 14155098.8
(22) Anmeldetag: 13.02.2014
(51) Int. Cl.: F26B 23/00, F26B 3/02, F26B 21/00, F26B 23/02, F26B 15/12

(54) **Vorrichtung zum Trocknen eines Werkstücks und Verfahren zum Betrieb einer derartigen Vorrichtung**
Device for drying a workpiece and method for operating such a device
Dispositif de séchage d'une pièce et procédé de fonctionnement d'un tel dispositif

(30) Priorität: 09.03.2013 DE 102013004136
(43) Veröffentlichungstag der Anmeldung: 10.09.2014
(73) Patentinhaber: Volkswagen Aktiengesellschaft, 38440 Wolfsburg (DE)
(72) Erfinder: Glaser, Ehrenfried, 38518 Gifhorn (DE); Szabo, Gabor, 38440 Wolfsburg (DE)

(56) Entgegenhaltungen:
- CH-A5- 609 214
- DE-A1- 3 703 598
- US-A- 3 936 951
- US-A- 4 255 132
- US-B1- 6 418 636

## Beschreibung

Die Erfindung betrifft eine Vorrichtung zum Trocknen eines Werkstücks, insbesondere zum Trocknen einer Fahrzeugkarosserie, gemäß Anspruch 1, wobei die Vorrichtung einem Trocknungstunnel aufweist, welcher aus einer Mehrzahl an Tunnelabschnitten besteht, wobei jeder der Tunnelabschnitte wenigstens einen Luftauslass und wenigstens einen Lufteinlass umfasst und einigen der Tunnelabschnitte ein Umluftheizaggregat zugeordnet ist, welchem Kammerabluft aus dem wenigstens einen Luftauslass des Tunnelabschnitts zuführbar ist und jedes Umluftheizaggregat einen Wärmetauscher umfasst, in dem Wärmeenergie von einer heißen Primärluft auf Kammerzuluft, die dem Tunnelabschnitt über den wenigstens einen Lufteinlass zuführbar ist, übertragbar ist.

Weiterhin betrifft die Erfindung ein Verfahren zum Betrieb einer derartigen Vorrichtung gemäß Anspruch 7.

Eine gattungsgemäße Vorrichtung ist aus der US 4,255,132 A bekannt. Diese offenbart bereits eine Vorrichtung zum Trocknen einer Fahrzeugkarosserie mit einem Trocknungstunnel, welcher aus einer Mehrzahl an Tunnelabschnitten besteht, wobei jeder der Tunnelabschnitte wenigstens einen Luftauslass und wenigstens einen Lufteinlass umfasst. Den Tunnelabschnitten ist ein Umluftheizaggregat zugeordnet, dem die Kammerabluft zuführbar ist. Das Umluftheizaggregat hat einen Wärmetauscher, in dem Wärmeenergie von einer heißen Primärluft auf eine Kammerzuluft übertragbar ist. Weiterhin hat das Umluftheizaggregat einen Frischlufteinlass, wobei durch den Frischlufteinlass dem Umluftheizaggregat Frischluft zuführbar ist, und eine Mischeinrichtung zum Vermengen der Frischluft mit der Kammerabluft.

Aus der US 6,418,636 B1 ist bereits ein Verfahren zum Betrieb einer Trocknungsvorrichtung bekannt, bei dem die zuzuführende Frischluft vor dem Einbringen in den jeweiligen Tunnelabschnitt in dem jeweiligen Umluftheizaggregat zur Erwärmung mit der Kammerabluft vermischt und als Kammerzuluft beziehungsweise Schleusenzuluft zurückgeführt wird.

Die DE 10 2010 006 550 A1 zeigt eine Vorrichtung zum Trocknen von Gegenständen, insbesondere von Fahrzeugkarosserien, bei der jedem Tunnelabschnitt ein Umluftheizaggregat zugeordnet ist und jedes Umluftheizaggregat eine thermische Nachverbrennungseinrichtung umfasst, der zumindest ein Teilvolumenstrom der Kammerabluft aus dem Tunnelabschnitt zuführbar ist. Die Nachverbrennungseinrichtung erzeugt die heiße Primärgasströmung. In dem Umluftheizaggregat sind in Strömungsrichtung der Primärgasströmung hintereinander ein erster und ein zweiter Wärmetauscher angeordnet. Die Wärmeenergie der Primärgasströmung wird in dem ersten Wärmetauscher an die Umluft des Tunnelabschnitts übertragen. In dem zweiten Wärmetauscher wird Wärmeenergie von der Primärgasströmung an die Frischluft übertragen.

Es ist weiterhin durch die Druckschrift DE 10 2007 062 266 A1 eine Beschichtungsanlage mit einem Trockner und einer Kühlvorrichtung bekannt, bei der eine Frischluftansaugstelle des Trockners mit der Trocknerfortluft aus der Kühlvorrichtung versorgt wird. Darüber hinaus ist in dieser Druckschrift offenbart, dass der Trocknerfortluft aus der Kühlzone mittels eines Wärmetauschers Wärmeenergie entzogen werden kann.

Auch die Druckschrift DE 199 41 760 A1 zeigt eine Kühlzone einer Vorrichtung zum Trocknen lackierter Gegenstände. Die Trocknerfortluft aus dieser Kühlzone kann zumindest teilweise vor der Abgabe an die Umwelt durch einen Wärmetauscher geleitet werden. In dem Wärmetauscher wird Wärmeenergie von der Trocknerfortluft der Kühlzone an die in dem Trockner zirkulierende Umluft und/oder an die in den Schleusen eingeblasene Frischluft übertragen.

In der Druckschrift DE 10 2007 024 745 A1 ist eine Vorrichtung zum Trocknen von Gegenständen beschrieben, bei welcher in dem Trocknungstunnel UV-Lampen zum Bestrahlen des Werkstücks angeordnet sind. Diese UV-Lampen werden durch ein Kühlmittel gekühlt. In einem Wärmetauscher wird dem Kühlmittel Wärmeenergie entzogen und der Umwälzluft des Trockentunnels zugeführt.

Die in der Druckschrift DE 10 2010 043 087 A1 gezeigte Vorrichtung zum Trocknen von Gegenständen hat eine als Trocknungstunnel ausgebildete Prozesskammer mit einer Eingangsschleuse und einer Ausgangsschleuse. In diesen Schleusen wird durch einen Brenner erhitzte Frischluft eingeblasen. Dabei ist jeder Schleuse ein Brenner zugeordnet, in dem Trocknerfortluft aus der Schleuse und/oder dem angrenzenden Tunnelbereich verbrannt wird.

Auch bei der Vorrichtung, die in der Druckschrift WO 2010/122121 A2 gezeigt ist, wird die Frischluft in der Eingangsschleuse und der Ausgangsschleuse eingeblasen. Die Erwärmung der Frischluft erfolgt in einem zentralen Wärmetauscher, wobei die Wärmeenergie von einem durch einen zentralen Brenner erzeugten heißen Primärgas an die Frischluft übertragen wird. Jeder der Tunnelabschnitte der Vorrichtung hat einen eigenen in sich geschlossenen Umluftkreislauf mit einem Umluftheizaggregat. Jedes der Umluftheizaggregate hat einen Wärmetauscher zur Übertragung von Wärmeenergie von dem durch den zentralen Brenner erzeugten heißen Primärgas an die Umluft. Die Trocknerfortluft aus dem Trocknungstunnel wird in dem zentralen Brenner verbrannt beziehungsweise in heißes Primärgas umgewandelt. Das heiße Primärgas durchströmt die Wärmetauscher der Umluftheizaggregate gleichgerichtet zur Förderrichtung der Werkstücke durch den Trocknungstunnel. Vor der Abgabe an die Umwelt durchströmt das Primärgas zuletzt den zentralen Wärmetauscher von Eingangsschleuse und Ausgangsschleuse.

Ein der Eingangsschleuse und Ausgangsschleuse zugeordneter zentraler Wärmetauscher zur Erwärmung der dort einzuspeisenden Frischluft ist auch in den Druckschriften DE 10 2010 001 234 A1 und WO 2009/109358 A1 beschrieben. Letztere zeigt auch mehrere Umluftheizaggregate, in welchen die Umluft erwärmt wird. Die Wärmetauscher der Umluftheizaggregate dienen jedoch nur der Rückgewinnung von Wärmeenergie aus der Trocknerfortluft der einzelnen Tunnelabschnitte. Die Trocknerfortluft wird in Strömungsrichtung nach den Umluftheizaggregaten in einem zentralen Brenner zu dem heißen Primärgas umgewandelt.

Durch den Trocknungsprozess werden im Trockner Lösemitteldämpfe und Wasserdämpfe frei. Die belastete Luft wird aus dem Trockner herausgetragen, meistens durch Absaugung, und durch Frischluft ersetzt. Um Schwankungen der Temperatur in den Prozesskammern des Trockners zu vermeiden, wird die Frischluft vor dem Einspeisen erwärmt, wie es auch aus dem Stand der Technik bekannt ist. Die Frischluft wird bevorzugt in den Schleusen eingespeist, da diese in der Regel als Luftschleier oder Luftvorhang ausgeführt sind und funktionsbedingt einen hohen Luftvolumenstrom erfordern.

Der Luftschleier ist eine Barriere zur Trennung unterschiedlich konditionierter Luftmassen, wodurch deren Austausch verhindert wird. Der Luftschleier besteht aus einer gerichteten Luftströmung über einer Ausblasöffnung.

In den Schleusen entstehen durch Vermischen von heißer Frischluft und von außen, beispielsweise aus einer vorgelagerten oder nachgeordneten Prozesskammer zuströmender Luft Mischtemperaturen. Die Mischtemperaturen müssen passend zu den erforderlichen Prozesstemperaturen in den Prozesskammern eingestellt werden.

Im Stand der Technik entsteht regelmäßig ein Zielkonflikt. Einerseits soll die Mischtemperatur die Prozesstemperatur möglichst wenig überschreiten beziehungsweise idealerweise mit der Prozesstemperatur identisch sein. Eine niedrigere Mischtemperatur wird dabei durch eine Reduzierung des Luftvolumenstroms in der Schleuse erreicht. Mit der Reduzierung des Luftvolumenstroms in der Schleuse nimmt jedoch die Wirkung des Luftschleiers ab, sodass es zur Bildung von Kondensat kommen kann. Bei einem für eine ideale Wirkung des Luftschleiers hohen Luftvolumenstrom kann die Mischtemperatur zu warm für die der Schleuse zugeordnete Prozesskammer sein. Eine zu hohe Mischtemperatur beziehungsweise Prozesstemperatur kann zu zumindest lokalen Qualitätsminderungen der Lackoberfläche führen.

Vor diesem Hintergrund liegen der Erfindung die Aufgaben zugrunde, eine Vorrichtung und ein Verfahren der eingangs genannten Art derart auszuführen, dass die Probleme des Stands der Technik beseitigt werden und/oder der Energiebedarf zum Trocknen eines Werkstücks reduziert wird.

Zumindest eine der Aufgaben wird gelöst mit einer Vorrichtung gemäß den Merkmalen des Patentanspruchs 1. Die Unteransprüche betreffen besonders zweckmäßige Weiterbildungen der Erfindung.

Erfindungsgemäß ist also eine Vorrichtung zum Trocknen eines Werkstücks vorgesehen, bei der in zumindest einem der Umluftheizaggregate der gemeinsame Volumenstrom von Frischluft und Kammerabluft erwärmt wird und dieser schließlich in die Kammerzuluft und die Schleusenzuluft aufgeteilt wird.. Diese Belüftung der Schleuse direkt aus dem Umluftheizaggregat hat den Vorteil, dass die Lufttemperatur der Schleusenzuluft in der Schleuse identisch mit der Kammerzuluft in der Prozesskammer ist. Somit sind starke Unterschiede und/oder Schwankungen der Temperatur innerhalb der Prozesskammer nahezu ausgeschlossen. Dies wirkt sich positiv auf die Qualität der Beschichtung des Werkstücks und den Energiebedarf der Vorrichtung aus. Dabei wird die Wirkung der Schleuse nicht beeinflusst, da die für die Funktion der Schleuse erforderliche Luftmenge beliebig und ohne Einfluss auf die Temperatur der Schleusenzuluft gewählt werden kann. Durch das Vermischen der Kammerabluft aus dem Tunnelabschnitt mit der Frischluft wird es möglich, außerhalb der Prozesskammer die Kammerzuluft, insbesondere die Schleusenzuluft, passend zur Prozesstemperatur zu temperieren. Somit können die Temperatur und der Luftvolumenstrom jedes Tunnelabschnitts, insbesondere der einem Tunnelabschnitt zugeordneten Schleuse, individuell auf die spezifischen Anforderungen des Tunnelabschnitts eingestellt werden. Die Frischluft wird dem Umluftheizaggregat durch den Frischlufteinlass zugeführt. Der Frischlufteinlass ist beispielsweise über eine zentrale Frischluftversorgung mit wenigstens einer Frischluftquelle verbunden. Die Mischeinrichtung dient dem Vermengen der Frischluft mit der Kammerabluft. Die Mischeinrichtung umfasst vorzugsweise einen Mischraum, in dem die Frischluft mit der Kammerabluft vermengt wird.

Um den Luftvolumenstrom von Frischluft und/oder Kammerabluft zu dem Mischraum beziehungsweise Kammerzuluft und/oder Schleusenzuluft von dem Trennraum zu beeinflussen, umfassen die Mischeinrichtung und/oder die Trenneinrichtung gemäß einer Weiterbildung wenigstens ein Dosiermittel, beispielsweise eine Drosselklappe. Mittels des Dosiermittels sind die Volumenströme und somit der Luftwechsel in der Prozesskammer variabel einstellbar. So wird die Bildung von Kondensat in dem gesamten Trockner, insbesondere in den Aufheizzonen, wesentlich reduziert.

Die Primärluft wird in einem Brenner der Vorrichtung erzeugt. Die Vorrichtung kann einen zentralen Brenner oder mehrere, insbesondere den Umluftheizaggregaten zugeordnete und/oder in den Umluftheizaggregaten angeordnete Brenner umfassen.

Bei einer Ausführungsform ist vorgesehen, dass einzelne Frischlufteinlasse mehrerer Umluftheizaggregate mit unterschiedlichen Frischluftquellen verbunden sind. Als Frischluftquellen können die Hallenluft aus der Fertigungshalle und/oder die Umgebungsluft von außerhalb der Fertigungshalle und/oder die Trocknerfortluft einzelner Tunnelabschnitte, wie beispielsweise einer Abdunstzone und/oder einer Kühlzone, herangezogen werden. Bei einer anderen Ausführungsform ist vorgesehen, dass die Frischlufteinlasse mehrerer Umluftheizaggregate mit einer zentralen Frischluftversorgung verbunden sind. Die zentrale Frischluftversorgung ist entweder mit einer einzigen Frischluftquelle oder mehreren Frischluftquellen verbunden.

Als vorteilhaft erwiesen hat es sich, dass die Mischeinrichtung einen Mischraum umfasst, welcher dem Umluftheizaggregat zugeordnet ist. Vorzugsweise ist der Mischraum in dem Umluftheizaggregat angeordnet. Der Mischraum kann mit mehreren Einlassöffnungen und einer Auslassöffnung ausgeführt sein, wobei die Auslassöffnung über einen Leitungsweg mit dem Wärmetauschereinlass verbunden ist. Vorzugsweise ist der Mischraum als ein Vorraum des Wärmetauschers ausgestaltet. Die Kammerzuluft und die Schleusenzuluft können in dem Wärmetauscher gezielt, insbesondere individuell abgestimmt auf die Prozesstemperatur in der jeweiligen Prozesskammer erwärmt werden.

Gemäß besonderer Ausführungsformen umfassen die Mischeinrichtung und/oder die Trenneinrichtung wenigstens ein Dosiermittel für die Begrenzung der Menge der Frischluft und/oder der Kammerabluft und/oder der Kammerzuluft und/oder der Schleusenzuluft. Das Dosiermittel ist als eine Klappe und/oder Schieber ausgebildet und vorzugsweise elektrisch ansteuerbar. Hierdurch ist es möglich, Luftvolumen und Lufttemperatur zu beeinflussen und zu regeln.

Indem die Vorrichtung zumindest einen Brenner und zumindest einer der Tunnelabschnitte der Vorrichtung wenigstens einen weiteren Luftauslass umfassen, über den Trocknerfortluft aus dem Tunnelabschnitt dem Brenner zuführbar ist, wird die Trocknerfortluft mit einem Brenner in einer thermischen Nachbehandlungsvorrichtung behandelt, insbesondere erhitzt und/oder verbrannt. Dabei wird die heiße Primärluft erzeugt. Als vorteilhaft erwiesen hat es sich, dass die Trocknerfortluft mehrerer oder aller Tunnelabschnitte zumindest einem zentralen Brenner zugeführt wird. Eine Nachbehandlungsvorrichtung kann sehr leistungsstark und mit einem hohen Wirkungsgrad ausgeführt werden. Es ist aber auch möglich, dass einzelnen oder allen Umluftheizaggregaten einzelner Tunnelabschnitte jeweils eine Nachbehandlungsvorrichtung zugeordnet ist. Hat die Vorrichtung mehrere Nachbehandlungsvorrichtungen, so ist es möglich, dass die Trocknerfortluft der jeweiligen Tunnelabschnitte bestimmten Nachbehandlungsvorrichtungen zugeführt wird.

Das Werkstück wird in einer einzigen Richtung, der Durchlaufrichtung, durch den Trocknungstunnel der Vorrichtung bewegt. Bei einer Passage des Trocknungstunnels wird das Werkstück nur einmal durch jeden Tunnelabschnitt geführt.

Häufig ist zumindest einer der Tunnelabschnitte als eine Kühlzone ausgebildet. Dieser Tunnelabschnitt ist über wenigstens einen weiteren Luftauslass für die gegenüber den anderen Frischluftquellen wärmere Kühlzonenfortluft mit zumindest einem der Frischlufteinlasse der anderen Tunnelabschnitte beziehungsweise der zentralen Frischluftversorgung verbunden. Hierdurch ist es möglich, die Kühlzonenfortluft als Frischluftquelle zu nutzen. Die Kühlzone ist in Durchlaufrichtung des Werkstücks dem Trockner nachgeordnet, beispielsweise ist die Kühlzone in Durchlaufrichtung der letzte Tunnelabschnitt der Vorrichtung. Die Kühlzone dient dem Abkühlen des lackierten und getrockneten Werkstücks.

Weitere Vorteile der erfindungsgemäßen Vorrichtung sind, dass durch die Erwärmung der Frischluft in den Umluftheizaggregaten ein gesonderter, zentraler Wärmetauscher für die Frischluft entfällt und durch die beliebig einstellbare Luftmenge in den Schleusen die Bildung von Kondensaten reduziert wird. Durch die Aufteilung des Volumenstroms nach dem Wärmetauscher wird es möglich, in den einzelnen Tunnelabschnitten unterschiedliche, zonenbezogene, Luftwechselraten variabel zu betreiben. Der Volumenstrom der Kammerabluft beziehungsweise der Trocknerfortluft ist entsprechend dem Volumenstrom von Kammerzuluft und Schleusenzuluft des jeweiligen Tunnelabschnitts variabel.

Dies gilt insbesondere für die Tunnelabschnitte der Aufheizzone. Schließlich ist durch die gezielte und individuelle Temperierung und Volumenaufteilung der Frischluft eine präzise Einhaltung der Temperatur in den Prozesskammern möglich, wodurch die Qualität der Beschichtung des Werkstücks verbessert beziehungsweise der Trocknungsprozess optimiert werden kann.

Zumindest eine der Aufgaben wird weiterhin gelöst mit einem Verfahren gemäß den Merkmalen des Patentanspruchs 7. Die Unteransprüche betreffen besonders zweckmäßige Weiterbildungen der Erfindung.

Erfindungsgemäß ist also ein Verfahren zum Betrieb einer Vorrichtung zum Trocknen eines Werkstücks vorgesehen, bei dem in zumindest einem der Umluftheizaggregate der gemeinsame Volumenstrom von Frischluft und Kammerabluft erwärmt und dieser schließlich in die Kammerzuluft und die Schleusenzuluft aufgeteilt wird.

Günstig ist es, dass die Kammerzuluft vor dem Einbringen in den Tunnelabschnitt in eine Kammerzuluft und einen Schleusenstrom getrennt wird. Hierdurch ist die Temperatur des Schleusenstroms identisch mit der Temperatur der Kammerzuluft. Die Temperatur in dem Tunnelabschnitt ist dabei unabhängig von dem Volumen des Schleusenstroms. Bei einer Änderung des Volumens des Schleusenstroms weichen die Temperaturen von Kammerzuluft und Schleusenstrom nicht voneinander ab.

Es ist möglich, dass die Umluftheizaggregate nacheinander von der Primärluft durchströmt werden. Als besonders vorteilhaft erwiesen hat sich jedoch, dass einzelne oder alle der Umluftheizaggregate parallel von der Primärluft durchströmt werden. Dabei ist der Volumenstrom der Primärluft in den einzelnen Umluftheizaggregaten individuell regelbar. Vorzugsweise ist die Strömungsrichtung der Primärluft entgegen der Durchlaufrichtung des Werkstücks orientiert. Hierdurch ist es möglich, trotz eines Temperaturgefälles in der Primärluft entlang dessen Strömungsstrecke, eine ideale Nutzung der Wärmeenergie aus der Primärluft zu erzielen. Die heiße Primärluft durchströmt dabei zuerst den Wärmetauscher, welcher dem Tunnelabschnitt mit der höchsten Prozesstemperatur zugeordnet ist, und als letztes den Wärmetauscher, der dem Tunnelabschnitt mit der geringsten Prozesstemperatur zugeordnet ist.

Die Erfindung lässt zahlreiche Ausführungsformen zu. Zur weiteren Verdeutlichung ihres Grundprinzips sind einige davon in der Zeichnung dargestellt und werden nachfolgend beschrieben. Diese zeigt in
- Fig. 1: eine schematische Darstellung einer Vorrichtung zum Trocknen eines Werkstücks;
- Fig. 2: eine schematische Darstellung eines Umluftheizaggregats der in der Figur 1 dargestellten Vorrichtung.

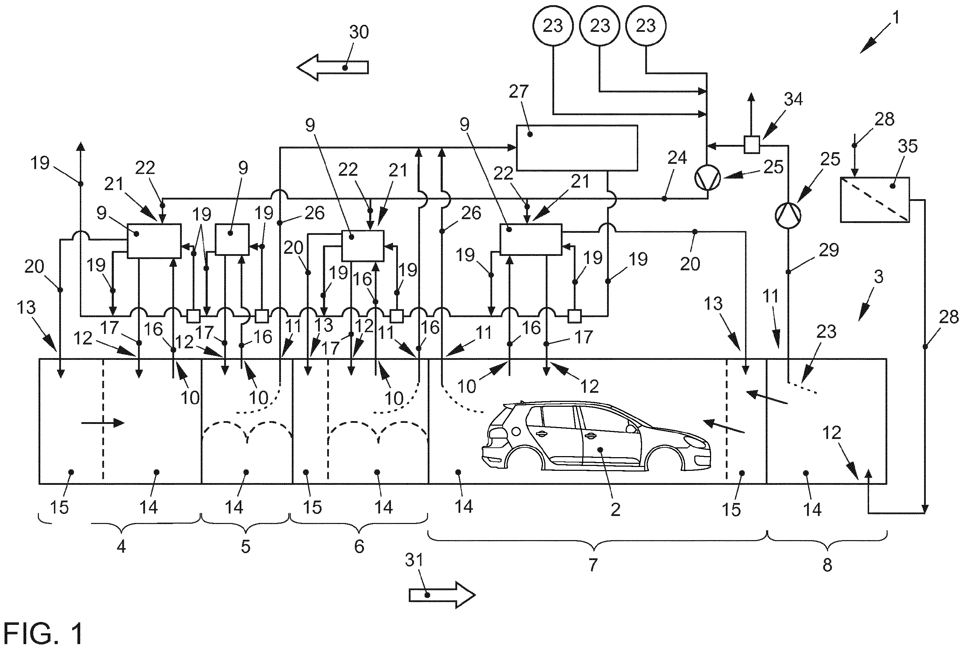

Figur 1 zeigt eine erste Ausführungsform einer Vorrichtung 1 zum Trocknen eines Werkstücks 2. Das Werkstück 2 ist bei den in der Zeichnung gezeigten Ausführungsformen eine Fahrzeugkarosserie. Die Vorrichtung 1 umfasst einen Trocknungstunnel 3, welcher aus einer Mehrzahl an Tunnelabschnitten 4, 5, 6, 7, 8 besteht.

Einigen der Tunnelabschnitte 4, 5, 6, 7 ist ein Umluftheizaggregat 9 zugeordnet und jeder der Tunnelabschnitte 4, 5, 6, 7, 8 umfasst wenigstens einen Luftauslass 10, 11 und wenigstens einen Lufteinlass 12, 13. In den Umluftheizaggregaten 9 wird die Luft der Prozesskammern 14 der Tunnelabschnitte 4, 5, 6, 7 umgewälzt und erwärmt. Diese Umluft wird aus dem Luftauslass 10 als Kammerabluft 16 dem Umluftheizaggregat 9 zugeführt und dann als Kammerzuluft 17 über den Lufteinlass 12 in die Prozesskammer 14 zurückgeführt.

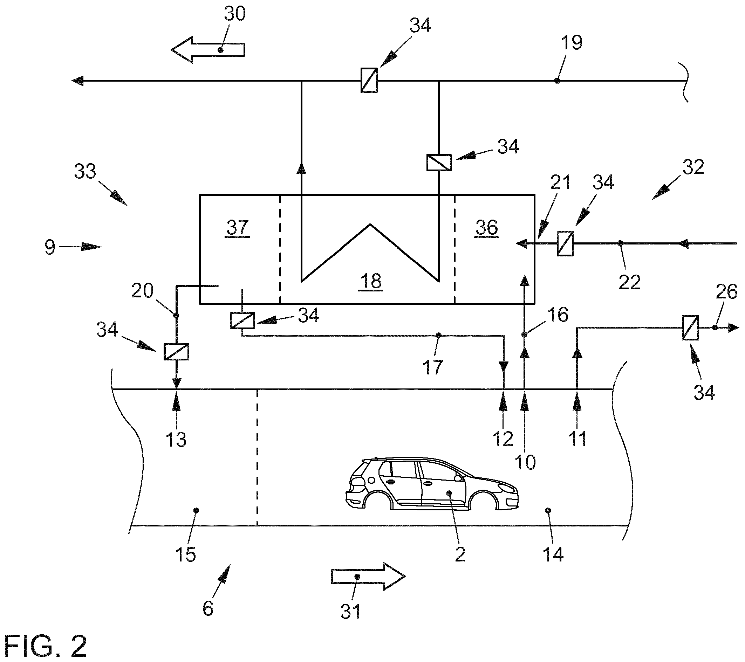

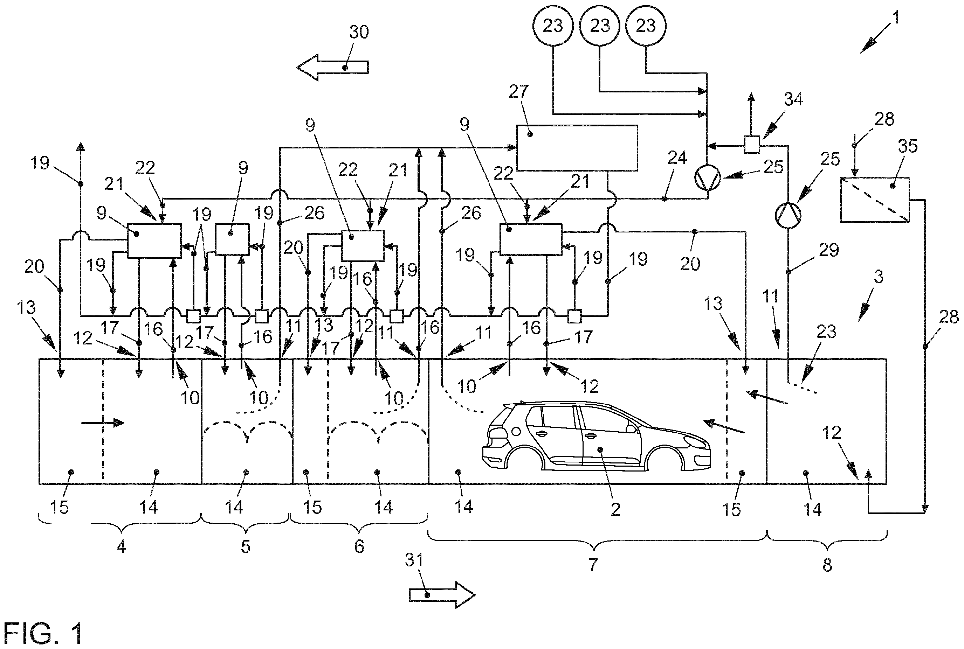

Jedes Umluftheizaggregat 9 umfasst einen in Figur 2 gezeigten Wärmetauscher 18, in dem Wärmeenergie von einer heißen Primärluft 19 auf die Kammerzuluft 17 beziehungsweise auf eine Schleusenzuluft 20 übertragbar ist. Einige der Umluftheizaggregate 9 umfassen auch einen Frischlufteinlass 21, über den Frischluft 22 von zumindest einer Frischluftquelle 23 dem Umluftheizaggregat 9 zugeführt wird. Die Frischlufteinlasse 21 sind über eine zentrale Frischluftversorgung 24 miteinander und mit den Frischluftquellen 23 verbunden. Die Frischluftversorgung 24 umfasst optional Regeleinrichtungen 25, beispielsweise Dosiermittel 34 und/oder Ventilatoren, zur energieeffizienten Versorgung der Vorrichtung 1 mit Frischluft 22. In dem Umluftheizaggregat 9 wird die Frischluft 22 mit der Kammerabluft 16 vermischt, dann der gemeinsame Volumenstrom erwärmt und schließlich der Volumenstrom in die Kammerzuluft 17 und die Schleusenzuluft 20 aufgeteilt.

Aus einigen der Tunnelabschnitte 5, 6, 7 wird über den Luftauslass 11 Trocknerfortluft 26 entnommen und einer Nachverbrennungseinrichtung 27 der Vorrichtung 1 zugeführt. In der Nachverbrennungseinrichtung 27 wird die Trocknerfortluft 26 behandelt und so die heiße Primärluft 19 erzeugt.

Ein Tunnelabschnitt ist als eine Kühlzone 8 ausgebildet. Die Kühlzonenfortluft 29 aus der Kühlzone 8 ist über den Luftauslass 11 einem der Frischlufteinlasse 21 beziehungsweise der zentralen Frischluftversorgung 24 zuführbar. Somit dient die Kühlzone 8 als Frischluftquelle 23. Der Kühlzone 8 ist ein Kühler 35 zugeordnet, welcher über einen Lufteinlass 12 mit der Kühlzone 8 verbunden ist.

Die Strömungsrichtung 30 der Primärluft 19 ist vorzugsweise gegenläufig zu der Durchlaufrichtung 31 des Werkstücks 2 orientiert. Die Kühlzone 28 ist in der Regel in Durchlaufrichtung 31 des Werkstücks 2 der letzte Tunnelabschnitt 8.

Figur 2 zeigt in einer vergrößerten Darstellung eines der Umluftheizaggregate 9. Das Umluftheizaggregat 9 umfasst neben dem Wärmetauscher 18 eine Mischeinrichtung 32 und eine Trenneinrichtung 33. In einem Mischraum 36 der Mischeinrichtung 32 wird die durch den Frischlufteinlass 21 dem Umluftheizaggregat 9 zugeführte Frischluft 22 mit der Kammerabluft 16 aus dem Tunnelabschnitt 6 vermengt. Die Trenneinrichtung 33 umfasst einen Trennraum 37 zur Aufteilung des Volumenstroms nach dem Wärmetauscher 18 in die Kammerzuluft 17 und die Schleusenzuluft 20. Der Mischraum 36 und der Trennraum 37 sind in der dargestellten Ausführungsform als dem Wärmetauscher 18 vor- beziehungsweise nachgeordnete und zum Wärmetauscher 18 hin offene Räume ausgeführt. Die Kammerzuluft 17 wird über den Lufteinlass 12 der Prozesskammer 14 des Tunnelabschnitts 6 zugeführt. Die Schleusenzuluft 20 wird über den Lufteinlass 13 der Schleuse 15 des Tunnelabschnitts 6 zugeführt.

## Patentansprüche

1. Vorrichtung (1) zum Trocknen eines Werkstücks (2), insbesondere zum Trocknen einer Fahrzeugkarosserie, mit einem Trocknungstunnel (3), welcher aus einer Mehrzahl an Tunnelabschnitten (4, 5, 6, 7, 8) besteht, wobei jeder der Tunnelabschnitte (4, 5, 6, 7, 8) wenigstens einen Luftauslass (10, 11) und wenigstens einen Lufteinlass (12, 13) umfasst und mehreren der Tunnelabschnitte (4, 5, 6, 7) ein Umluftheizaggregat (9) zugeordnet ist, welchem Kammerabluft (16) aus dem wenigstens einen Luftauslass (10, 11) des Tunnelabschnitts (4, 5, 6, 7, 8) zuführbar ist und jedes Umluftheizaggregat (9) einen Wärmetauscher (18) umfasst, in dem Wärmeenergie von einer heißen Primärluft (19) auf eine Kammerzuluft (17), die dem Tunnelabschnitt (4, 5, 6, 7) über den wenigstens einen Lufteinlass (12) zuführbar ist, übertragbar ist, wobei zumindest einem der Umluftheizaggregate (9) ein Frischlufteinlass (21) und eine Mischeinrichtung (32) zugeordnet ist, wobei durch den Frischlufteinlass (21) dem Umluftheizaggregat (9) Frischluft (22) zuführbar ist und die Mischeinrichtung (32) zum Vermengen der Frischluft (22) mit der Kammerabluft (16) vorgesehen ist, wobei die den einzelnen Tunnelabschnitten (4, 6, 7) zuzuführende Frischluft (22) vor dem Einbringen in den Tunnelabschnitt (4, 6, 7) in zumindest einem der Umluftheizaggregate (9) der Tunnelabschnitte (4, 6, 7) zur Erwärmung mit der Kammerabluft (16) zu einer Kammerzuluft (17) und einer Schleusenzuluft (20) vermischt wird, wobei aus einigen der Tunnelabschnitte (5, 6, 7) über den Luftauslass (11) Trocknerfortluft (26) entnommen und einer Nachverbrennungseinrichtung (27) der Vorrichtung (1) zugeführt sowie in der Nachverbrennungseinrichtung (27) die Trocknerfortluft (26) behandelt und so die heiße Primärluft (19) erzeugt wird, wobei in zumindest einem der Umluftheizaggregate (9) der gemeinsame Volumenstrom von Frischluft (22) und Kammerabluft (16) erwärmt wird und dieser schließlich in die Kammerzuluft (17) und die Schleusenzuluft (20) aufgeteilt wird.

2. Vorrichtung (1) zum Trocknen eines Werkstücks (2) nach Anspruch 1, **dadurch gekennzeichnet, dass** einzelne Frischlufteinlasse (21) mehrerer Umluftheizaggregate (9) mit unterschiedlichen Frischluftquellen (23) verbunden sind und/oder die Frischlufteinlasse (21) mehrerer Umluftheizaggregate (9) mit einer zentralen Frischluftversorgung (24) verbunden sind, wobei die Frischluftversorgung (24) mit einer einzigen Frischluftquelle (23) oder mehreren Frischluftquellen (23) verbunden ist.

3. Vorrichtung (1) zum Trocknen eines Werkstücks (2) nach den Ansprüchen 1 oder 2, **dadurch gekennzeichnet, dass** die Mischeinrichtung (32) einen Mischraum (36) und/oder die Trenneinrichtung (33) einen Trennraum (37) umfasst, wobei der Mischraum (36) beziehungsweise der Trennraum (37) unabhängig und entfernt von dem Umluftheizaggregat (9) ausgebildet oder in dem Umluftheizaggregat (9) angeordnet ist.

4. Vorrichtung (1) zum Trocknen eines Werkstücks (2) nach zumindest einem der vorangehenden Ansprüche, **dadurch gekennzeichnet, dass** zumindest eines der Umluftheizaggregate (9) mit einem Frischlufteinlass (21) eine Trenneinrichtung (33) aufweist, welche zum Trennen in eine Kammerzuluft (17) und eine Schleusenzuluft (20) vorgesehen ist, wobei der Kammerzuluft (17) über wenigstens einen ersten Lufteinlass (12) einer Prozesskammer (14) des Tunnelabschnitts (4, 5, 6, 7) zugeführt wird und die Schleusenzuluft (20) über wenigstens einen zweiten Lufteinlass (13) einer dem Tunnelabschnitt (4, 5, 6, 7) zugeordneten Schleuse (15) zugeführt wird.

5. Vorrichtung (1) zum Trocknen eines Werkstücks (2) nach zumindest einem der vorangehenden Ansprüche, **dadurch gekennzeichnet, dass** die Mischeinrichtung (32) und/oder die Trenneinrichtung (33) wenigstens ein Dosiermittel (34) umfassen, mittels dem das Strömungsvolumen der Frischluft (22) und/oder der Kammerabluft (16) und/oder der Kammerzuluft (17) und/oder der Schleusenzuluft (20) variabel einstellbar ist.

6. Vorrichtung (1) zum Trocknen eines Werkstücks (2) nach zumindest einem der vorangehenden Ansprüche, **dadurch gekennzeichnet, dass** wenigstens einer der Tunnelabschnitte als eine Kühlzone (8) ausgebildet ist und über den wenigstens einen weiteren Luftauslass (11) der Kühlzone (8) die Kühlzonenfortluft (29) zumindest einem der Frischlufteinlasse (21) beziehungsweise der zentralen Frischluftversorgung (24) zuführbar ist.

7. Verfahren zum Betrieb einer zum Trocknen eines Werkstücks (2) vorgesehenen Vorrichtung (1) mit einem Trocknungstunnel (3), welcher aus einer Mehrzahl an Tunnelabschnitten (4, 5, 6, 7, 8) besteht, wobei jeder der Tunnelabschnitte (4, 5, 6, 7, 8) wenigstens einen Luftauslass (10, 11) und wenigstens einen Lufteinlass (12, 13) umfasst und mehreren der Tunnelabschnitte (4, 5, 6, 7) ein Umluftheizaggregat (9) zugeordnet ist, nach den Merkmalen des Anspruchs 1, bei dem die den einzelnen Tunnelabschnitten (4, 6, 7) zuzuführende Frischluft (22) vor dem Einbringen in den Tunnelabschnitt (4, 6, 7) in zumindest einem der Umluftheizaggregate (9) der Tunnelabschnitte (4, 6, 7) zur Erwärmung mit der Kammerabluft (16) zu einer Kammerzuluft (17) und einer Schleusenzuluft (20) vermischt wird, wobei aus einigen der Tunnelabschnitte (5, 6, 7) über den Luftauslass (11) Trocknerfortluft (26) entnommen und einer Nachverbrennungseinrichtung (27) der Vorrichtung (1) zugeführt sowie in der Nachverbrennungseinrichtung (27) die Trocknerfortluft (26) behandelt und so die heiße Primärluft (19) erzeugt wird, wobei in zumindest einem der Umluftheizaggregate (9) der gemeinsame Volumenstrom von Frischluft (22) und Kammerabluft (16) erwärmt und dieser schließlich in die Kammerzuluft (17) und die Schleusenzuluft (20) aufgeteilt wird.

8. Verfahren nach Anspruch 7, **dadurch gekennzeichnet, dass** die Kammerzuluft (17) vor dem Einbringen in den Tunnelabschnitt (4, 6, 7) in eine Kammerzuluft (17) und eine Schleusenzuluft (20) getrennt wird.

9. Verfahren nach einem der Ansprüche 7 und 8, **dadurch gekennzeichnet, dass** die Umluftheizaggregate (9) nacheinander von der Primärluft (19) durchströmt werden, wobei die Strömungsrichtung (30) der Primärluft (19) entgegen der Durchlaufrichtung (31) des Werkstücks (2) orientiert ist.

10. Verfahren nach zumindest einem der Ansprüche 7 bis 9, **dadurch gekennzeichnet, dass** die Kühlzonenfortluft (29) einer Kühlzone (8) als Frischluft (22) zumindest einem der Umluftheizaggregate (9) zugeführt wird.

## Claims

1. A device (1) for drying a work piece (2), in particular for drying a vehicle body, having a drying tunnel (3), which consists of a plurality of tunnel sections (4, 5, 6, 7, 8), wherein each of the tunnel sections (4, 5, 6, 7, 8) comprises at least one air outlet (10, 11) and at least one air inlet (12, 13) and a circulating air heating unit (9) is assigned to a plurality of tunnel sections (4, 5, 6, 7), to which chamber exhaust air (16) from the at least one air outlet (10, 11) of the tunnel section (4, 5, 6, 7, 8) can be supplied and each circulating air heating unit (9) comprises a heat exchanger (18), in which thermal energy from a hot primary air (19) can be transferred to a chamber supply air (17), which can be supplied to the tunnel section (4, 5, 6,7) via the at least one air inlet (12), wherein a fresh air inlet (21) and a mixing device (32) is assigned at least to one of the circulating air heating units (9), wherein fresh air (22) can be supplied through the fresh air inlet (21) to the circulating air heating unit (9) and the mixing device (32) is provided for the mixing of the fresh air (22) with the chamber exhaust air (16), wherein the fresh air (22) to be supplied to the individual tunnel sections (4, 6, 7) is mixed before being introduced into the tunnel section (4, 6, 7) in at least one of the circulating air heating units (9) of the tunnel sections (4, 6, 7) for heating with the chamber exhaust air (16) to form a chamber supply air (17) and a sluice supply air (20), wherein dryer outgoing air (26) is removed from some of the tunnel sections (5, 6, 7) via the air outlet (11) and is supplied to an afterburner device (27) of the device (1) and the dryer outgoing air (26) is treated in the afterburner device (27) and thus the hot primary air (19) is generated, wherein in at least one of the circulating air heating units (9) the common volume flow of fresh air (22) and chamber exhaust air (16) is heated and this is finally divided into the chamber supply air (17) and the sluice supply air (20).

2. A device (1) for drying a work piece (2) according to Claim 1, **characterized in that** individual fresh air inlets (21) of a plurality of circulating air heating units (9) are connected to different fresh air sources (23) and/or the fresh air inlets (21) of a plurality of circulating air heating units (9) are connected to a central fresh air supply (24), wherein the fresh air supply (24) is connected to a single fresh air source (23) or to a plurality of fresh air sources (23).

3. A device (1) for drying a work piece (2) according to Claims 1 or 2, **characterized in that** the mixing device (32) comprises a mixing chamber (36) and/or the separating device (33) comprises a separation chamber (37), wherein the mixing chamber (36) or the separation chamber (37) is designed independently and removed from the circulating air heating unit (9) or is arranged in the circulating air heating unit (9).

4. A device (1) for drying a work piece (2) according to at least one of the preceding claims, **characterized in that** at least one of the circulating air heating units (9) with a fresh air inlet (21) has a separating device (33), which is provided for separating into a chamber supply air (17) and a sluice supply air (20), wherein the chamber supply air (17) is supplied via at least one first air inlet (12) to a process chamber (14) of the tunnel section (4, 5, 6, 7) and the sluice supply air (20) is supplied via at least one second air inlet (13) to a sluice (15) assigned to the tunnel section (4, 5, 6, 7).

5. A device (1) for drying a work piece (2) according to at least one of the preceding claims, **characterized in that** the mixing device (32) and/or the separating device (33) comprise at least one metering means (34), by means of which the flow volume of the fresh air (22) and/or the chamber exhaust air (16) and/or the chamber supply air (17) and/or the sluice supply air (20) is variably adjustable.

6. A device (1) for drying a work piece (2) according to at least one of the preceding claims, **characterized in that** at least one of the tunnel sections is designed as a cooling zone (8) and via the at least one further air outlet (11) of the cooling zone (8) the cooling zone outgoing air (29) can be supplied at least to one of the fresh air inlets (21) or to the central fresh air supply (24).

7. A method for operating a device (1) provided for drying a work piece (2) having a drying tunnel (3), which consists of a plurality of tunnel sections (4, 5, 6, 7, 8), wherein each of the tunnel sections (4, 5, 6, 7, 8) comprises at least one air outlet (10, 11) and at least one air inlet (12, 13) and a circulating air heating unit (9) is assigned to a plurality of tunnel sections (4, 5, 6, 7), according to the features of Claim 1, in which the fresh air (22) to be supplied to the individual tunnel sections (4, 6, 7) is mixed before being introduced into the tunnel section (4, 6, 7) in at least one of the circulating air heating units (9) of the tunnel sections (4, 6, 7) for heating with the chamber exhaust air (16) to form a chamber supply air (17) and a sluice supply air (20), wherein dryer outgoing air (26) is removed from some of the tunnel sections (5, 6, 7) via the air outlet (11) and is supplied to an afterburner device (27) of the device (1) and the dryer outgoing air (26) is treated in the afterburner device (27) and thus the hot primary air (19) is generated, wherein in at least one of the circulating air heating units (9) the common volume flow of fresh air (22) and chamber exhaust air (16) is heated and this is finally divided into the chamber supply air (17) and the sluice supply air (20).

8. A method according to Claim 7, **characterized in that** the chamber supply air (17) is separated before being introduced into the tunnel section (4, 6, 7) into a chamber supply air (17) and a sluice supply air (20).

9. A method according to any one of Claims 7 and 8, **characterized in that** the circulating air heating units (9) are flowed through successively by the primary air (19), wherein the flow direction (30) of the primary air (19) is oriented against the throughput direction (31) of the work piece (2).

10. A method according to at least one of Claims 7 to 9, **characterized in that** the cooling zone outgoing air (29) of a cooling zone (8) is supplied as fresh air (22) at least to one of the circulating air heating units (9).

## Revendications

1. Dispositif (1) destiné au séchage d'une pièce (2), en particulier au séchage d'une carrosserie de véhicule, avec un tunnel de séchage (3) qui se compose d'une pluralité de tronçons de tunnel (4, 5, 6, 7, 8), chacun des tronçons de tunnel (4, 5, 6, 7, 8) comprenant au moins une sortie d'air (10, 11) et au moins une entrée d'air (12, 13), et un groupe de chauffage à circulation d'air (9) étant affecté à plusieurs des tronçons de tunnel (4, 5, 6, 7) et auquel de l'air sortant de chambre (16) en provenance de la sortie d'air (10, 11) au moins au nombre de un du tronçon de tunnel (4, 5, 6, 7, 8) peut être acheminé, et chaque groupe de chauffage à circulation d'air (9) comprenant un échangeur de chaleur (18) dans lequel de l'énergie thermique d'un air primaire (19) chaud peut être transmise à un air entrant de chambre (17) qui peut être acheminé au tronçon de tunnel (4, 5, 6, 7) par le biais de l'entrée d'air (12) au moins au nombre de un, une entrée d'air frais (21) et un équipement de mixage (32) étant affectés au moins à l'un des groupes de chauffage à circulation d'air (9), de l'air frais pouvant être acheminé au groupe de chauffage à circulation d'air (9) à travers l'entrée d'air frais (21), et l'équipement de mixage (32) étant prévu pour mélanger l'air frais (22) avec l'air sortant de chambre (16), l'air frais (22) à acheminer aux différents tronçons de tunnel (4, 6, 7) étant mélangé avant l'introduction dans le tronçon de tunnel (4, 6, 7) dans au moins un des groupes de chauffage à circulation d'air (9) des tronçons de tunnel (4, 6, 7) pour le réchauffage avec l'air sortant de chambre (16) pour donner un air entrant de chambre (17) et un air entrant de sas (20), de l'air d'échappement de sécheur (26) étant prélevé à partir de quelques-uns des tronçons de tunnel (5, 6, 7) par le biais de la sortie d'air (11) et étant acheminé à un équipement de postcombustion (27) du dispositif (1), de même que l'air d'échappement de sécheur (26) est traité dans l'équipement de postcombustion (27) et ainsi l'air primaire (19) chaud est produit, le flux volumique commun d'air frais (22) et d'air sortant de chambre (16) étant chauffé dans au moins un des groupes de chauffage à circulation d'air (9) et celui-ci étant finalement divisé en air entrant de chambre (17) et en air entrant de sas (20).

2. Dispositif (1) destiné au séchage d'une pièce (2) selon la revendication 1, **caractérisé en ce que** différentes entrées d'air frais (21) de plusieurs groupes de chauffage à circulation d'air (9) sont raccordées à différentes sources d'air frais (23) et/ou les entrées d'air frais (21) de plusieurs groupes de chauffage à circulation d'air (9) sont raccordées à une alimentation en air frais (24) centrale, l'alimentation en air frais (24) étant raccordée à une source d'air frais (23) unique ou à plusieurs sources d'air frais (23) .

3. Dispositif (1) destiné au séchage d'une pièce (2) selon les revendications 1 ou 2, **caractérisé en ce que** l'équipement de mixage (32) comprend un espace de mixage (36), et/ou l'équipement de séparation (33) comprend un espace de séparation (37), l'espace de mixage (36) ou respectivement l'espace de séparation (37) étant constitué indépendamment et à distance du groupe de chauffage à circulation d'air (9) ou disposé dans le groupe de chauffage à circulation d'air (9).

4. Dispositif (1) destiné au séchage d'une pièce (2) selon au moins l'une des revendications précédentes, **caractérisé en ce qu'**au moins un des groupes de chauffage à circulation d'air (9) avec une entrée d'air frais (21) comporte un équipement de séparation (33) qui est prévu pour la séparation en un air entrant de chambre (17) et un air entrant de sas (20), l'air entrant de chambre (17) étant, par le biais d'au moins une première entrée d'air (12), acheminé à une chambre de process (14) du tronçon de tunnel (4, 5, 6, 7), et l'air entrant de sas (20) étant, par le biais d'au moins une deuxième entrée d'air (13), acheminé à un sas (15) affecté au tronçon de tunnel (4, 5, 6, 7).

5. Dispositif (1) destiné au séchage d'une pièce (2) selon au moins l'une des revendications précédentes, **caractérisé en ce que** l'équipement de mixage (32) et/ou l'équipement de séparation (33) comprennent au moins un moyen de dosage (34), au moyen duquel le volume d'écoulement de l'air frais (22) et/ou de l'air sortant de chambre (16) et/ou de l'air entrant de chambre (17) et/ou de l'air entrant de sas (20) peut être réglé de façon variable.

6. Dispositif (1) destiné au séchage d'une pièce (2) selon au moins l'une des revendications précédentes, **caractérisé en ce qu'**au moins un des tronçons de tunnel est constitué en tant que zone de refroidissement (8) et, par le biais de l'autre sortie d'air (11) au moins au nombre de un de la zone de refroidissement (8), l'air d'échappement de zone de refroidissement (29) peut être acheminé au moins à une des entrées d'air frais (21) ou respectivement à l'alimentation en air frais (24) centrale.

7. Procédé destiné au fonctionnement d'un dispositif (1) prévu pour le séchage d'une pièce (2), avec un tunnel de séchage (3) qui se compose d'une pluralité de tronçons de tunnel (4, 5, 6, 7, 8), chacun des tronçons de tunnel (4, 5, 6, 7, 8) comprenant au moins une sortie d'air (10, 11) et au moins une entrée d'air (12, 13), et un groupe de chauffage à circulation d'air (9) étant affecté à plusieurs des tronçons de tunnel (4, 5, 6, 7), selon les caractéristiques de la revendication 1, dans lequel l'air frais (22) à acheminer aux différents tronçons de tunnel (4, 6, 7) est, avant l'introduction dans le tronçon de tunnel (4, 6, 7), mélangé dans au moins un des groupes de chauffage à circulation d'air (9) des tronçons de tunnel (4, 6, 7) pour le chauffage avec l'air sortant de chambre (16) pour donner un air entrant de chambre (17) et un air entrant de sas (20), de l'air d'échappement de sécheur (26) étant prélevé à partir de quelques-uns des tronçons de tunnel (5, 6, 7) par le biais de la sortie d'air (11) et étant acheminé à un équipement de postcombustion (27) du dispositif (1) de même que l'air d'échappement de sécheur (26) est traité dans l'équipement de postcombustion (27), et ainsi l'air primaire (19) chaud est produit, le flux volumique commun d'air frais (22) et d'air sortant de chambre (16) étant chauffé dans au moins un des groupes de chauffage à circulation d'air (9) et celui-ci étant finalement divisé en air entrant de chambre (17) et en air entrant de sas (20).

8. Procédé selon la revendication 7, **caractérisé en ce que** l'air entrant de chambre (17) est, avant l'introduction dans le tronçon de tunnel (4, 6, 7), séparé en un air entrant de chambre (17) et un air entrant de sas (20).

9. Procédé selon l'une des revendications 7 et 8, **caractérisé en ce que** les groupes de chauffage à circulation d'air (9) sont parcourus les uns après les autres par l'air primaire (19), le sens d'écoulement (30) de l'air primaire (19) étant orienté à l'inverse du sens de défilement (31) de la pièce (2) .

10. Procédé selon au moins l'une des revendications 7 à 9, **caractérisé en ce que** l'air d'échappement de zone de refroidissement (29) d'une zone de refroidissement (8) est acheminé en tant qu'air frais (22) au moins à l'un des groupes de chauffage à circulation d'air (9).
